# EUROPÄISCHE PATENTANMELDUNG

(11) **EP 1 167 857 A2**
(43) Veröffentlichungstag der Anmeldung: **02.01.2002**
(21) Anmeldenummer: 00116455.7
(22) Anmeldetag: 29.07.2000
(51) Int. Cl.: F16L 57/00, B65G 53/52

(54) **Rohrbogen zum Transport von abrasiven Materialien**

(30) Priorität: 01.07.2000 DE 10032074
(71) Anmelder: Esser -Werke GmbH & Co. KG, 59581 Warstein (DE)
(72) Erfinder: Esser, Alexander, 59581 Warstein (DE)
(74) Vertreter: Bockermann, Rolf, Dipl.-Ing.

(57) **Zusammenfassung**

Ein derartiger Rohrbogen (1) besitzt zwischen zwei endseitigen Kupplungsbunden (2) aus jeweils einem verschleißfesteren Innenring (4) und einem eine umlaufende äußere Kupplungsnute (5) aufweisenden, gegenüber dem Innenring (4) weicheren Außenring (3) eine mit den beiden Außenringen (3) verschweißten Mantelbogen (6) mit einem Innendurchmesser, der größer als der Innendurchmesser der Außenringe (3) bemessen ist. Zwischen den beiden Innenringen (4) erstreckt sich im radialen Abstand zum Mantelbogen (6) ein Innenbogen (9). Dieser besteht aus einem gegenüber dem Mantelbogen (6) verschleißfesteren Werkstoff. Der Innenbogen (9) ist unter radialer punktueller Fixierung mit Hilfe von am Mantelbogen (6) verschweißter Distanzstifte (10) zum Mantelbogen (6) hinsichtlich seiner Bohrungsenden (14) zu den Bohrungen (15) der Innenringe (4) axial zentriert. Der Bereich (16) zwischen dem Innenbogen (9) und dem Mantelbogen (6) kann durch einen aushärtenden Kunststoff befüllt werden.

## Beschreibung

Der Transport von abrasiven Materialien, wie z.B. Sande oder aber insbesondere Beton, stellt an die dazu eingesetzten Rohrstränge aus einzelnen Rohrschüssen hohe Anforderungen. Auf der einen Seite sollen die Rohrschüsse und hier insbesondere die in den Rohrstrang mit verschiedenen Krümmungen eingegliederten Rohrbögen hinsichtlich ihrer inneren Oberflächen einen hohen Verschleißwiderstand gewährleisten. Auf der anderen Seite müssen jedoch die Rohrschüsse zur Umgebung hin vom Werkstoff her so ausgebildet sein, dass sie Aufprall- und Schlagbeanspruchungen ohne Rissbildung widerstehen. Mit anderen Worten ausgedrückt, die Rohrschüsse sollen innen hart und außen weich sein.

Um diesen beiden konträren Anforderungen an die Rohrschüsse als Bestandteile eines Rohrstrangs zu genügen, hat man die Rohrschüsse zweilagig ausgebildet. Die Innenlagen wurden zumindest über einen wesentlichen Teil ihrer radialen Dicke gehärtet, während die Außenlagen aus einem schweißbaren Stahl hergestellt wurden. Hiermit wurde auch dem Umstand Rechnung getragen, dass die Außenlagen endseitig mit Kupplungsbunden verbunden wurden, die dem Anschluss zweier in einem Rohrstrang aufeinander folgender Rohrschüsse dienten. Diese Kupplungsbunde waren so ausgebildet, dass ihre Stirnseiten im rechten Winkel zu den Längsachsen verliefen, so dass bei einem Verschleiß eines einzelnen Rohrschusses dieser nach dem Entfernen der entsprechenden, in der Regel zweiteiligen Kupplungsschellen, für sich radial aus dem Rohrstrang entfernt und durch einen neuen Rohrschuss ersetzt werden konnte, ohne dass für einen solchen Austausch der Rohrstrang axial auseinander gezogen werden musste.

Die vorstehend beschriebene Ausführungsform hat sich in der Praxis bei geradlinigen Rohrschüssen im Großen und Ganzen bewährt. Problematisch sind jedoch nach wie vor die Rohrbögen in einem Rohrstrang, insbesondere deshalb, weil sie durch das Umleiten des transportierten Materials erhöhten Verschleißbeanspruchungen ausgesetzt sind.

Der Erfindung liegt, ausgehend vom Stand der Technik, die Aufgabe zugrunde, einen Rohrbogen als Bestandteil eines Rohrstrangs zum Transport von abrasiven Materialien, wie z.B. Sande oder Beton, zu schaffen, der den gestellten Anforderungen an hohe Verschleißfestigkeit und leichte Auswechselbarkeit bei einfacher Herstellung besser genügt.

Die Lösung dieser Aufgabe wird in den Merkmalen des Patentanspruchs 1 gesehen.

Ein derartiger Rohrbogen besitzt demnach zwischen den beiden endseitigen Kupplungsbunden aus jeweils einem verschleißfesteren Innenring und einem eine umlaufende äußere Kupplungsnute aufweisenden, gegenüber dem Innenring weicheren Außenring neben einem mit den beiden Außenringen verschweißten Mantelbogen einen gegenüber diesem aus einem verschleißfesteren Werkstoff bestehenden Innenbogen. Dieser Innenbogen ist unter radialer Fixierung zum Mantelbogen mit Bildung eines Ringraums hinsichtlich seiner Bohrungsenden zu den Bohrungen der Innenringe axial zentriert. Dadurch, dass sowohl in radialer Richtung zum Mantelbogen als auch in axialer Richtung zu den Innenringen der Kupplungsbunde jeweils ein vergleichsweise großer Abstand vorhanden ist, kann der Innenbogen unter Berücksichtigung aller herstellungsbedingten Ungenauigkeiten dennoch problemlos so in den Mantelbogen integriert werden, dass die Bohrungsenden des Innenbogens einwandfrei axial auf die Bohrungen in den Innenringen der Kupplungsbunde ausgerichtet sind. Auf diese Weise werden radiale Versetzungen oder Absätze zwischen dem Innenbogen und den Innenringen vermieden, die einer erhöhten Verschleißbeanspruchung ausgesetzt wären und damit die Standzeit des Rohrbogens verkürzen würden.

Die exakte Ausrichtung der Bohrungsenden des Innenbogens auf die Bohrungen in den Innenringen kann insbesondere dadurch bewirkt werden, dass von den Stirnseiten des Rohrbogens her Zentrierstempel in die Kupplungsbunde eingeführt werden. Danach erfolgt die radiale Fixierung des Innenbogens im Mantelbogen. Wenn dann anschließend die Zentrierstempel wieder entfernt worden sind, ist eine perfekte Ausrichtung der Bohrungsenden des Innenbogens auf die Bohrungen in den Innenringen der Kupplungsbunde gewährleistet. Aufgrund dieser Maßnahme kann auch dem Sachverhalt Rechnung getragen werden, dass der erfindungsgemäße Rohrbogen kein höheres Gewicht gegenüber bekannten Rohrbögen haben soll. Die Standzeit eines erfindungsgemäßen Rohrbogens wird somit beträchtlich verlängert.

Eine vorteilhafte Weiterbildung der Erfindung wird in den Merkmalen des Patentanspruchs 2 erblickt. Danach ist der Innenbogen durch, insbesondere stählerne, Distanzstifte gegenüber dem Mantelbogen radial auf Abstand fixiert. Mit Hilfe der Distanzstifte kann der Innenbogen leicht und einwandfrei in dem erforderlichen Abstand unter Berücksichtigung der Herstellungsungenauigkeiten gehalten werden.

Die Distanzstifte werden zweckmäßig in Bohrungen des Mantelbogens eingeschlagen, so dass sie hier einen bestimmten Festsitz haben und auf diese Weise der Innenbogen im Mantelbogen lageorientiert ist. Vorsorglich werden jedoch nach Patentanspruch 3 die Distanzstifte am Mantelbogen durch Schweißung festgelegt. An der äußeren Oberfläche des Innenbogens stützen sich die Distanzstifte nur ab.

Eine weitere vorteilhafte Ausführungsform zur radialen Fixierung des Innenbogens im Mantelbogen unter Ausbildung eines alle Herstellungsungenauigkeiten sicher tolerierenden Ringraums zwischen dem Innenbogen und dem Mantelbogen wird in den Merkmalen des Patentanspruchs 4 erblickt. Danach ist der Innenbogen durch eine über Bohrungen im Mantelbogen in den Ringraum zwischen Innenbogen und Mantelbogen punktuell eingebrachte, schnell aushärtende, pastöse Masse gegenüber dem Mantelbogen radial fixiert. Bei dieser pastösen Masse handelt es sich insbesondere um einen schnell aushärtenden Mehrkomponentenbeton auf Kunststoffbasis. Die Masse füllt mithin im Bereich der Bohrungen den Ringraum zwischen Innenbogen und Mantelbogen aus und bildet gewissermaßen eine stützende Brücke zwischen Innenbogen und Mantelbogen.

Obwohl es in der Regel genügt, den Innenbogen zum Mantelbogen punktuell radial zu fixieren, steht es dem erfindungsgemäßen Gedanken nicht entgegen, über die Bohrungen im Mantelbogen so viel pastöse Masse einzubringen, dass der gesamte Ringraum zwischen Innenbogen und Mantelbogen oder doch zumindest ein großer Teil dieses Ringraums befüllt wird.

Nach der Erfindung ist es zweckmäßig, wenn die Bohrungen zum Einbringen der pastösen Masse gemäß Patentanspruch 5 durch insbesondere stählerne Einsatzstifte verschlossen sind. Die Länge der Einsatzstifte braucht lediglich der Wanddicke des Mantelbogens zu entsprechen. Ihre Lage in den Bohrungen kann durch Einpressen gesichert werden.

Zweckmäßiger ist es jedoch nach Patentanspruch 6, wenn die Einsatzstifte durch Schweißung am Mantelbogen festgelegt sind.

Die einwandfreie Lage des Innenbogens im Mantelbogen kann gemäß den Merkmalen des Patentanspruchs 7 dadurch gesichert werden, dass die Distanzstifte oder die Bohrungen zum Einfüllen der pastösen Masse in zwei axial zueinander versetzten Querschnittsebenen in jeweils 120°-Versetzung vorgesehen sind. Selbstverständlich steht dem erfindungsgemäßen Gedanken nichts entgegen, wenn die Distanzstifte oder die Bohrungen auch in mehreren Querschnittsebenen sowie in einer geringeren umfangsseitigen Versetzung als 120° angeordnet werden.

Eine bevorzugte Ausführungsform wird in den Merkmalen des Patentanspruchs 8 erblickt. Danach bestehen die Außenringe sowie der Mantelbogen aus einem schweißbaren Stahl und die Innenringe sowie der Innenbogen aus Stahlguss. Als Stahlguss kommt insbesondere ein Chromcarbidguss zur Anwendung.

Die durch die erfindungsgemäße Ausbildung entstehenden Spalte zwischen dem Innenbogen, den Innenringen und dem Mantelbogen werden in der Regel im Betrieb des Rohrbogens in kürzester Zeit durch das jeweils zu transportierende Material ausgefüllt, so dass dann der harte Innenbogen gewissermaßen ein zusätzliches Polster als Abstützung gegenüber dem weicheren Mantelbogen erhält.

Ungeachtet dieser sich in der Praxis ergebenden Situation kann es darüber hinaus entsprechend den Merkmalen des Patentanspruchs 9 von Vorteil sein, dass der Ringraum zwischen dem Innenbogen und dem Mantelbogen mit einem aushärtenden Kunststoff befüllt ist. Auf diese Weise erhält der Innenbogen schon bei der Herstellung des Rohrbogens und für dessen Transport eine einwandfreie Abstützung am Mantelbogen. Darüber hinaus wird durch diese Maßnahme verhindert, dass sich durch in dem Ringraum eventuell festsetzendes Material der Mantelbogen unzulässig verformen kann, wenn er, insbesondere zwecks Gewichtseinsparung, in der Wanddicke vergleichsweise dünn gehalten ist.

Das Einbringen des Kunststoffs in den Ringraum zwischen dem Innenbogen und dem Mantelbogen erfolgt bevorzugt durch wenigstens eine Öffnung im Mantelbogen, die dann anschließend wieder verschlossen wird. Hierfür können eine Schweißung, ein eingepresster Stift oder auch ein verschweißter Stift zum Einsatz gelangen.

Die Erfindung ist nachfolgend anhand von in den Zeichnungen dargestellten Ausführungsbeispielen näher erläutert. Es zeigen:
- Figur 1: im vertikalen Längsschnitt einen Rohrbogen;
- Figur 2: einen Querschnitt durch die Darstellung der Figur 1 in der Ebene II-II in Richtung des Pfeils IIa gesehen und
- Figur 3: in vergrößertem Maßstab den Ausschnitt III der Figur 1 gemäß einer weiteren Ausführungsform.

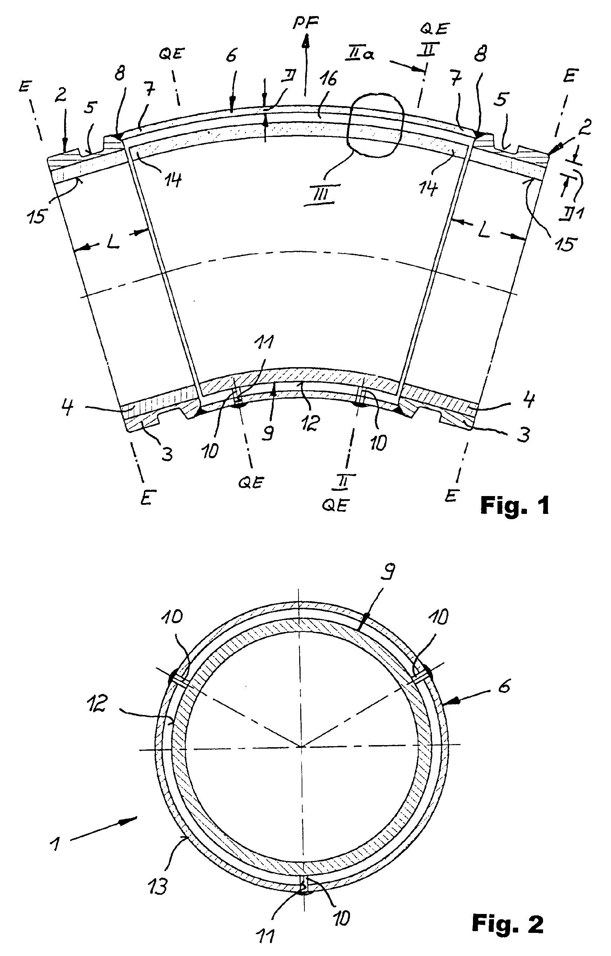

Mit 1 ist in den Figuren 1 bis 3 ein Rohrbogen als Bestandteil eines ansonsten nicht näher veranschaulichten Rohrstrangs zum Transport von Beton bezeichnet. Ein solcher Rohrbogen 1 kann beispielsweise in einen Rohrstrang eingesetzt sein, der auf Baustellen zum Transport des Betons von einem mobilen oder immobilen Betonmischer zur Stelle des Verbrauchs dient.

Der Rohrbogen 1 besitzt zwei endseitige Kupplungsbunde 2 aus jeweils einem Außenring 3 aus schweißbarem Stahl und einem Innenring 4 aus Stahlguss, insbesondere Chromcarbidguss. Die axiale Länge L der Außenringe 3 und Innenringe 4 ist identisch, so dass sich die Stirnseiten der Außen- und Innenringe 3, 4 in jeweils derselben Ebene E-E erstrecken. Auf diese Weise ist eine radiale Entfernung des Rohrbogens 1 in Richtung des Pfeils PF aus einem Rohrstrang und die anschließende Wiedereingliederung eines neuen Rohrbogens 1 in umgekehrter Richtung in den Rohrstrang problemlos möglich, ohne dass der Rohrstrang hierfür auseinander gezogen werden müsste.

Die Innenringe 4 sind in die Außenringe 3 beispielsweise eingepresst. Die Außenringe 3 besitzen umlaufende äußere Kupplungsnuten 5. In diese Kupplungsnuten 5 fassen die Schenkel von nicht näher dargestellten schalenartigen Kupplungsschellen.

Zwischen den Außenringen 3 der beiden Kupplungsbunde 2 erstreckt sich ein Mantelbogen 6 aus schweißbarem Stahl. Die Wanddicke D des Mantelbogens 6 ist kleiner als die Wanddicke D1 der Außenringe 3 bemessen. Die Enden 7 des Mantelbogens 6 sind durch V-Nähte 8 mit den Außenringen 3 verschweißt.

In den Mantelbogen 6 ist zwischen die Innenringe 4 der beiden Kupplungsbunde 2 ein Innenbogen 9 aus Stahlguss, insbesondere Chromcarbidguss, integriert. Der Innenbogen 9 ist sowohl zu den Innenringen 4 als auch zum Mantelbogen 6 mit Abstand angeordnet. Dieser Abstand übersteigt die herstellungsbedingten Ungenauigkeiten aller Bestandteile des Rohrbogens 1.

Zur einwandfreien Zentrierung des Innenbogens 9 zwischen den Innenringen 4 und gegenüber dem Mantelbogen 6 dienen stählerne Distanzstifte 10, die in zwei axial zueinander versetzten Querschnittsebenen QE in jeweils 120°- Versetzung vorgesehen sind. Die Distanzstifte 10 durchsetzen Bohrungen 11 in dem Mantelbogen 6 und gelangen an der äußeren Oberfläche 12 des Innenbogens 9 zur Anlage. Sie werden nach der Lagefixierung des Innenbogens 9 am Außenumfang 13 des Mantelbogens 6 mit diesem verschweißt.

Die Montage des Rohrbogens 1 kann mit den nachstehend erläuterten Herstellungsschritten erfolgen:

Nach der Einzelanfertigung der Kupplungsbunde 2, des Mantelbogens 6, des Innenbogens 9 und der Distanzstifte 10 wird der Mantelbogen 6 nach einer zuvor erfolgten Integrierung des Innenbogens 9 zwischen die Außenringe 3 der Kupplungsbunde 2 eingeschweißt. Danach erfolgt eine Zentrierung des Innenbogens 9 gegenüber den Innenringen 4 der Kupplungsbunde 2 dadurch, dass die Bohrungsenden 14 des Innenbogens 9 mit den Bohrungen 15 in den Innenringen 4 axial ausgerichtet werden. Dies kann über in der Zeichnung nicht näher veranschaulichte stirnseitig in die Innenringe 4 einführbare Zentrierstempel erfolgen.

Nach dieser Zentrierung, die Absätze oder Stufen zwischen dem Innenbogen 9 und den Innenringen 4 vermeidet, werden die Distanzstifte 10 durch die Bohrungen 11 in dem Mantelbogen 6 getrieben, bis sie mit der äußeren Oberfläche 12 des Innenbogens 9 in Kontakt gelangen. Anschließend werden die Distanzstifte 10 am Mantelbogen 6 durch Schweißung festgelegt und die Zentrierstempel entfernt

Zusätzlich kann der Ringraum 16 zwischen dem Innenbogen 9 und dem Mantelbogen 6 durch einen, insbesondere schnell, aushärtenden Kunststoff befüllt werden.

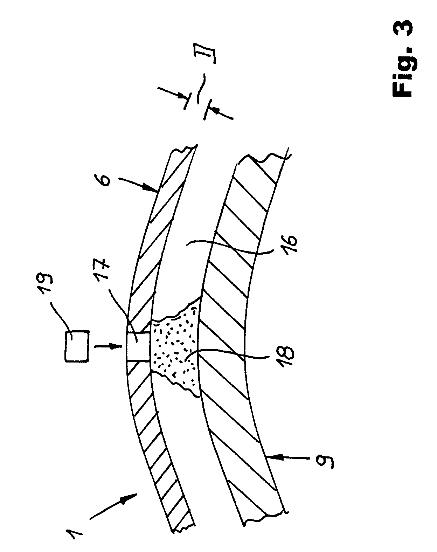

Die Figur 3 zeigt eine Ausführungsform, bei welcher die radiale Fixierung des Innenbogens 9 zum Mantelbogen 6 durch eine über Bohrungen 17 im Mantelrohr 6 in den Ringraum 16 zwischen dem Innenbogen 9 und dem Mantelbogen 6 eingebrachte schnell aushärtende pastöse Masse 18, insbesondere in Form von schnell aushärtendem Mehrkomponentenbeton auf Kunststoffbasis erfolgt.

Auch bei dieser Ausführungsform können, wie bei der Ausführungsform der Figuren 1 und 2, Innenbogen 9 und Mantelbogen 6 punktuell zueinander radial distanziert sein.

Nach dem Einfüllen der Masse 18 in den Ringraum 16 können die Bohrungen 17 durch insbesondere stählerne Einsatzstifte 19 verschlossen werden. Die Länge der Einsatzstifte 19 entspricht vorzugsweise der Wanddicke D des Mantelbogens 6. Die Einsatzstifte 19 können in die Bohrungen 17 eingepresst sein. Es ist aber auch vorstellbar, dass die Einsatzstifte 19 mit dem Mantelbogen 6 zusätzlich verschweißt werden. Dies kann durch eine Heftnaht am Außenumfang des Mantelbogens 6 erfolgen.

### Bezugszeichenaufstellung

- 1: - Rohrbogen
- 2: - Kupplungsbunde
- 3: - Außenringe von 2
- 4: - Innenringe von 2
- 5: - Kupplungsnuten in 3
- 6: - Mantelbogen
- 7: - Enden von 6
- 8: - V-Nähte
- 9: - Innenbogen
- 10: - Distanzstifte
- 11: - Bohrungen in 6
- 12: - Oberfläche von 9
- 13: - Außenumfang von 6
- 14: - Bohrungsenden von 9
- 15: - Bohrungen in 4
- 16: - Ringraum zwischen 6 und 9
- 17: - Bohrungen in 6
- 18: - Masse
- 19: - Einsatzstifte

- D: - Wanddicke von 6
- D1: - Wanddicke von 3
- E-E-: - Ebenen
- L: - Länge von 3 und 4
- PF: - Pfeil
- QE: - Querschnittsebenen

## Patentansprüche

1. Rohrbogen als Bestandteil eines Rohrstrangs zum Transport von abrasiven Materialien, wie z.B. Sande oder Beton, welcher zwischen zwei endseitigen Kupplungsbunden (2) aus jeweils einem verschleißfesteren Innenring (4) und einem eine umlaufende äußere Kupplungsnute (5) aufweisenden, gegenüber dem Innenring (4) weicheren Außenring (3) einen mit den beiden Außenringen (3) verschweißten Mantelbogen (6) mit einem Innendurchmesser besitzt, der größer als der Innendurchmesser der Außenringe (3) bemessen ist, und dass sich zwischen den beiden Innenringen (4) im radialen Abstand zum Mantelbogen (6) ein Innenbogen (9) erstreckt, der aus einem gegenüber dem Mantelbogen (6) verschleißfesteren Werkstoff besteht und unter radialer Fixierung zum Mantelbogen (6) hinsichtlich seiner Bohrungsenden (14) zu den Bohrungen (15) der Innenringe (4) axial zentriert ist.

2. Rohrbogen nach Patentanspruch 1, bei welchem der Innenbogen (9) durch Distanzstifte (10) gegenüber dem Mantelbogen (6) radial fixiert ist.

3. Rohrbogen nach Patentanspruch 2, bei welchem die Distanzstifte (10) am Mantelbogen (6) durch Schweißung festgelegt sind.

4. Rohrbogen nach Patentanspruch 1, bei welchem der Innenbogen (9) durch eine über Bohrungen (17) im Mantelbogen (6) in den Ringraum (16) zwischen Innenbogen (9) und Mantelbogen (6) punktuell eingebrachte, schnell aushärtende pastöse Masse (18) gegenüber dem Mantelbogen (6) radial fixiert ist.

5. Rohrbogen nach Patentanspruch 4, bei welchem die Bohrungen (17) durch Einsatzstifte (19) verschlossen sind.

6. Rohrbogen nach Patentanspruch 5, bei welchem die Einsatzstifte (19) durch Schweißung am Mantelbogen (6) festgelegt sind.

7. Rohrbogen nach einem der Patentansprüche 2 bis 6, bei welchem die Distanzstifte (10) oder die Bohrungen (17) zum Einfüllen der pastösen Masse (18) in zwei axial zueinander versetzten Querschnittsebenen (QE) in jeweils 120°-Versetzung vorgesehen sind.

8. Rohrbogen nach einem der Patentansprüche 1 bis 7, bei welchem die Außenringe (3) sowie der Mantelbogen (6) aus einem schweißbaren Stahl und die Innenringe (4) sowie der Innenbogen (9) aus Stahlguss bestehen.

9. Rohrbogen nach einem der Patentansprüche 1 bis 8, bei welchem der Ringraum (16) zwischen dem Innenbogen (9) und dem Mantelbogen (6) mit einem aushärtenden Kunststoff befüllt ist.
